(19) Europäisches Patentamt
European Patent Office
Office européen des brevets

(11) **EP 1 241 029 B1**

(12) **EUROPÄISCHE PATENTSCHRIFT**

(45) Veröffentlichungstag und Bekanntmachung des Hinweises auf die Patenterteilung:
**09.12.2009   Patentblatt 2009/50**

(51) Int Cl.:
***B60G 17/015*** *(2006.01)*

(21) Anmeldenummer: **02001218.3**

(22) Anmeldetag: **17.01.2002**

(54) **Verfahren und Einrichtung zur Ermittlung des Fahrzustandes von Fahrzeugen bei Ausfall oder Fehlen eines Geschwindigkeitssensors**

Method and device for determining the driving status of a vehicle in the case of failure of or signal errors from a speed sensor

Méthode et dispositif d'évaluation des conditions de conduite d'un véhicule au cas de panne ou des erreurs au signal d'un capteur de vitesse

(84) Benannte Vertragsstaaten:
**DE FR GB IT**

(30) Priorität: **14.03.2001   DE 10112159**

(43) Veröffentlichungstag der Anmeldung:
**18.09.2002   Patentblatt 2002/38**

(73) Patentinhaber: **WABCO GmbH**
**30453 Hannover (DE)**

(72) Erfinder:
• **Hesse, Karl-Heinz**
**31157 Sarstedt (DE)**

• **Thielking, Olaf**
**30459 Hannover (DE)**

(74) Vertreter: **Schrödter, Manfred et al**
**WABCO GmbH**
**Postfach 91 12 62**
**30432 Hannover (DE)**

(56) Entgegenhaltungen:
| | |
|---|---|
| EP-A2- 0 538 965 | EP-A2- 0 545 130 |
| WO-A-91/19261 | DE-A1- 19 648 176 |

EP 1 241 029 B1

**Beschreibung**

Die Erfindung betrifft ein Verfahren zur Ermittlung des Fahrzustandes eines Fahrzeugs bei Ausfall oder Fehlen eines Geschwindigkeitssensors sowie eine Einrichtung zur Durchführung des Verfahrens.

Bei Ausfall oder Fehlen eines Geschwindigkeitssensors kann nicht mehr zwischen Fahrt und Stillstand eines Fahrzeugs unterschieden werden, was bspw. für die Funktionsfähigkeit von Niveau- und Stoßdämpferregelungen nachteilig ist.

Aus der gattungsgemäßen DE 196 48 176 ist eine Niveauregeleinrichtung zur Regelung des Abstandes zwischen einem Fahrzeugchassis und einem Fahrzeugaufbau eines luftgefederten Fahrzeugs mit Steuerung der Schwingungsdämpfer bekannt. Für diese Steuerung wird ein Stellsignal verwendet, das einem nach bekannter Weise ermittelten Dämpfungsbedarf für die Bewegung des Fahrzeugaufbaus entspricht. Dieser Dämpfungsbedarf wird durch eine den Straßenzustand beschreibende Schlechtweg-Kenngröße modifiziert, um die Fahrsicherheit und den Komfort zu verbessern. Die Berechnung der Schlechtweg-Kenngröße erfolgt unter Verwendung der Beschleunigung des Federweges, die durch zweifache Differentiation des gemessenen Federweges erzeugt wird. Die zu dämpfenden Aufbaubewegungen sind durch die Ermittlung von Walkwinkel und Walkfrequenz sowie von Nickwinkel und Nickfrequenz des Fahrzeugaufbaus festgelegt. Diese bekannte Regeleinrichtung ist für die Unterscheidung zwischen Fahrt und Stillstand eines Fahrzeugs sowie für die Ermittlung der Frequenz des zeitlichen Verlaufs der Federwege und damit für

- eine Plausibilitätsüberwachung eines Fahrgeschwindigkeitssensors,
- das Sperren oder Aktivieren beliebiger Funktionen einer elektronisch gesteuerten Niveauregulierung, je nach ermitteltem Fahrzustand (Stillstand oder Fahrt) oder je nach ermittelter Frequenz des zeitlichen Verlaufs der Federwege, und
- das Sperren oder Aktivieren beliebiger Funktionen einer elektronischen Stoßdämpfersteuerung oder -regelung, je nach ermitteltem Fahrzustand (Stillstand oder Fahrt) oder je nach ermittelter Frequenz des zeitlichen Verlaufs der Federwege

nur beschränkt einsetzbar, insbesondere dann, wenn die Federwege eine statische Auslenkung erfahren, wie es bspw. in einem unebenen Gelände oder bei asymmetrischer Beladung der Fall sein kann, oder bei geringen Schwingungsamplituden der Federwege, wie es bspw. bei langsamer Fahrt auf ebenen Straßen der Fall sein kann.

Die Aufgabe der vorliegenden Erfindung besteht darin, ein Verfahren und eine Einrichtung anzugeben, mit denen auch bei Ausfall oder Fehlen eines Fahrgeschwindigkeitssensors zwischen Fahrt und Stillstand unterschieden werden kann, um bspw. auch in einem derartigen Fall einen Regeleingriff in eine Niveauregulierung oder Stoßdämpfersteuerung oder -regelung durchführen zu können und einen vorhandenen Fahrgeschwindigkeitssensor auf Plausibilität prüfen zu können.

Diese Aufgabe wird durch die Erfindung gemäß Anspruch 1 gelöst.

Eine Einrichtung zur Durchführung des Verfahrens ist im Anspruch 4 angegeben.

Vorteilhafte und zweckmäßige Weiterbildungen sowie Anwendungen der Erfindung sind in den weiteren Ansprüchen angegeben.

Durch die Erfindung ist eine Plausibilitätsüberwachung von Fahrgeschwindigkeitssensoren möglich. Auch bei Ausfall oder Fehlen eines Fahrgeschwindigkeitssensors kann durch die Erfindung zwischen Fahrt und Stillstand unterschieden werden. Die Erfindung ermöglicht die Feststellung der Schwingungsfrequenz des Federweges bzw. der Federwege. Funktionalitäten von Niveauregulierungen oder Stoßdämpferregelungen, die bei Fahrt, Stillstand oder bestimmten Schwingungsfrequenzen des Federweges oder der Federwege gesperrt bzw. aktiviert sein sollen, können mit Hilfe der Erfindung gesperrt bzw. aktiviert werden. Das erfindungsgemäße Verfahren bzw. die erfindungsgemäße Einrichtung funktioniert unabhängig von der statischen Auslenkung des Federweges bzw. der Federwege.

Die Erfindung ist anwendbar bei Fahrzeugen mit mindestens einem Federwegsensor an mindestens einem Rad oder mindestens einer Achse. Ferner ist die Erfindung anwendbar bei Fahrzeugen, die außer mindestens einem Federwegsensor zusätzlich eine elektronisch gesteuerte Niveauregulierung oder eine elektronische Stoßdämpfersteuerung oder -regelung aufweisen und/oder die zusätzlich über einen elektronischen Fahrgeschwindigkeitssensor verfügen. Die Erfindung ermöglicht, Fahrzeuge mit zusätzlichen Funktionalitäten auszustatten, die sonst nur bei Fahrzeugen mit Fahrgeschwindigkeitssensor denkbar sind.

Die Erfindung soll nachfolgend anhand der beigefügten Zeichnung näher erläutert werden.

Es zeigt

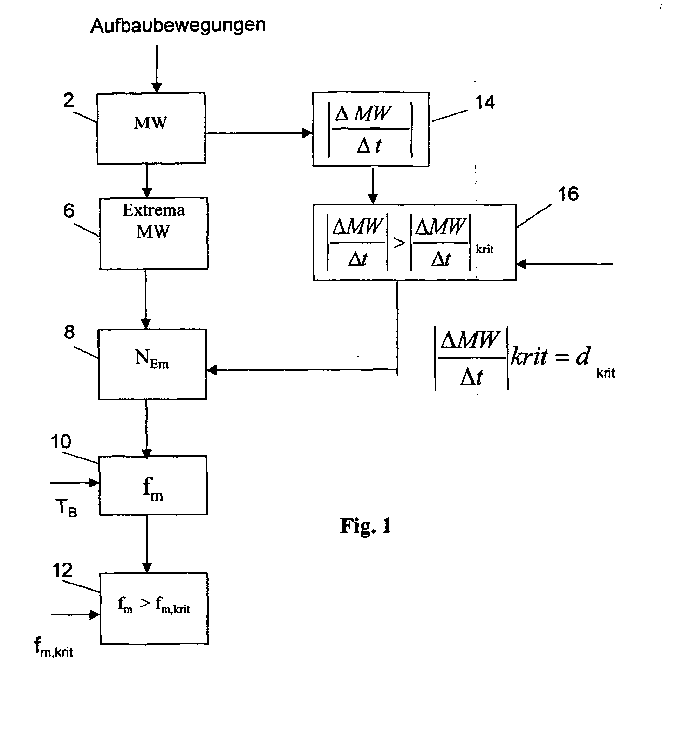

Fig. 1    ein Blockschaltbild einer erfindungsgemäßen Einrichtung zur Durchführung des erfindungsgemäßen Verfahrens und

Fig. 2    ein Diagramm zur Erläuterung der Bestimmung lokaler Extrema der Relativbewegung zwischen Fahrzeugaufbau und Fahrzeugachse mit zwei Federwegsensoren.

Um festzustellen, ob sich ein Fahrzeug in Fahrt befindet, wird zunächst der zeitliche Verlauf der Federwege des Fahrzeuges mit mindestens der doppelten Radeigenfrequenz mittels Federwegsensoren abgetastet. Zwecks Elimination der Rollbewegungen des Fahrzeugaufbaues wird in einem ersten Block 2 für jede Fahrzeugachse m zu jedem Abtastzeitpunkt t mit

$$t = kT$$

mit

k:   Fortschrittszahl der Abtastung,
T:   Abtastperiode,

der Mittelwert $\overline{z}_m(t)$ aus allen $N_m$ an dieser Achse aufgenommenen aktuellen, ggf. vorgefilterten, Federwegwerten $z_{m_n}(t)$ gebildet die dem Block 2 als Eingangsgrößen zugeführt werden. Dieser Mittelwert

$$\overline{z}_m(t) = \frac{1}{N_m}\sum_{n=1}^{N_m} z_{m_n}(t)$$

mit

m:    Index der Achse und
$N_m$:   Anzahl der Federwegsensoren an der Achse m,

dient als Maß für die vertikale Relativbewegung zwischen Fahrzeugaufbau und betreffender Achse m.
Anstelle des Mittelwertes kann im Block 2 die Summe MW mit

$$MW = \overline{z}'_m(t) = N_m\overline{z}_m(t) = \sum_{n=1}^{N_m} z_{m_n}(t)$$

der aufgenommenen aktuellen Federwegwerte $z_{m_n}(t)$ gebildet werden. Vorausgesetzt, die Federwegwerte $z_{m_n}(t)$ liegen im Ganzzahl-Format vor, läßt dieses Vorgehen Operationen in Ganzzahl-Arithmetik zu und vermeidet Fließkomma-Operationen.
Innerhalb einer festlegbaren Beobachtungsperiode $T_B$ werden die lokalen Extrema des zeitlichen Verlaufes des Mittelwertes $\overline{z}_m(t)$ oder der Summe $MW = \overline{z}'_m(t)$ in einem Block 6 aus den als Eingangsgrößen zugeführten Summenwerten MW abgeleitet und einer Zähleinrichtung 8 zum Ermitteln der Anzahl $N_{E_m}$ der lokalen Extrema zugeführt. Nach Ablauf der Beobachtungsperiode $T_B$ wird die Frequenz $f_m$ mit

$$f_m = N_{E_m}/T_B$$

der vertikalen Relativbewegung zwischen Fahrzeugaufbau und der betrachteten Achse m aus dem Quotienten aus der Anzahl $N_{E_m}$ festgestellter lokaler Extrema und Dauer der Beobachtungsperiode $T_B$ in einem Block 10 bestimmt. In einer Vergleichseinrichtung 12 wird dann diese Frequenz $f_m$ mit einem vorgebbaren kritischen, dem Fahrzeugstillstand zugeordneten Wert $f_{m,krit}$ oder wird die Anzahl $N_{E_m}$ der während der Beobachtungsperiode $T_B$ festgestellten Extrema mit einem vorgebbaren, kritischen, dem Fahrzeugstillstand zugeordneten Wert $N_{E_m}$, verglichen.

Liegt die derart ermittelte Frequenz $f_m$ oberhalb des kritischen Wertes $f_{m,krit}$ bzw. liegt die Anzahl $N_{E_m}$ oberhalb des kritischen Wertes $N_{E_mkrit}$, so kann durch plausiblen Schluß davon ausgegangen werden, daß sich das Fahrzeug in Fahrt befindet, da Frequenzen oberhalb des kritischen Wertes $f_{m,krit}$ oder die Anzahl der Extrema oberhalb des kritischen Wertes $N_{E_mkrit}$ nicht im Stillstand, insbesondere auch nicht durch Be- und Entladungsvorgänge erregt werden können. Anderenfalls kann vom Stillstand des Fahrzeuges ausgegangen werden.

Die Bestimmung der Frequenz $f_m$ der vertikalen Relativbewegung bzw. die Ermittlung der Anzahl $N_{E_m}$ festgestellter Extrema der vertikalen Relativbewegung von Fahrzeugaufbau und Achse wird, wie beschrieben, fortlaufend mit der Beobachtungsperiode $T_B$ durchgeführt.

Bei der Erkennung lokaler Extrema muß allerdings ein Quantisierungsrauschen im Mittelwert $\overline{z}_m(t)$ der Federwegwerte oder der Summe $MW = \overline{z}'_m(t)$ der Federwegwerte der vertikalen Relativbewegung von Fahrzeugaufbau und Achse m berücksichtigt werden. Die durch dieses Rauschen erzeugten lokalen Extrema im Mittelwert $\overline{z}_m(t)$ oder der Summe $MW = \overline{z}'_m(t)$ dürfen daher nicht in die Berechnung der Frequenz $f_m$ eingehen. Hierzu ist eine Einrichtung 14 zur Ermittlung der Beträge der Änderung der Mittelwerte oder der Summen MW der aufgenommenen Federwege der vertikalen Relativbewegung vorgesehen, die in einer Vergleichseinrichtung 16 mit einem festlegbaren kritischen Wert $d_{krit}$ verglichen werden, welche die Zähleinrichtung 8 steuert, derart, daß ein lokales Extremum erst dann gezählt wird, wenn der Betrag der Änderung der Mittelwerte oder der Summen MW der aufgenommenen Federwege der vertikalen Relativbewegung den kritischen Wert $d_{krit}$ übersteigt, wenn also bei Betrachtung der Summe MW

$$\left|\frac{\Delta MW}{\Delta t}\right| = \left|\frac{\Delta \overline{z}'_m(t)}{\Delta t}\right| > \left|\frac{\Delta MW}{\Delta t}\right|_{krit} = \left|\frac{\Delta \overline{z}'_m(t)}{\Delta t}\right|_{krit} = d_{krit}$$

mit

$$d_{krit} \geq N_m$$

und

$$\Delta \overline{z}'_m(t) = \overline{z}'_m(kT) - \overline{z}'_m((k-1)T)$$

sowie

$$\Delta t = T \, .$$

Durch Einstellung der Werte $f_{m,krit}$ bzw. $N_{E_mkrit}$ sowie $T_B$ und $d_{krit}$ kann das oben geschilderte Verfahren an die schwingungstechnischen Eigenschaften eines Fahrzeuges und die Auflösung der Federwegsensoren angepaßt werden.

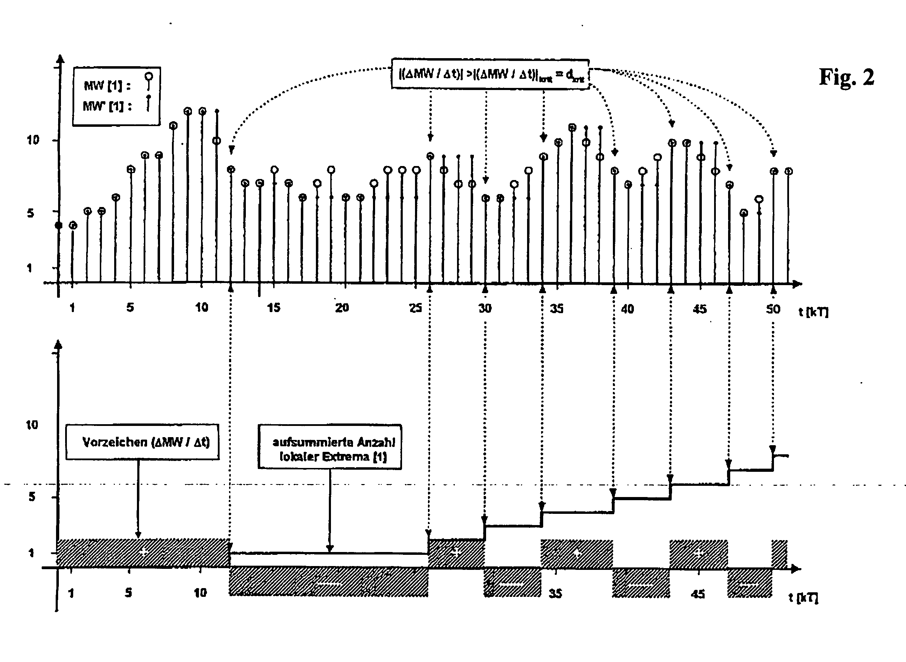

Die Fig. 2 zeigt die Anwendung des oben beschriebenen Verfahrens zur Bestimmung lokaler Extrema der Relativbewegung zwischen Fahrzeugaufbau und der Achse am Beispiel einer Fahrzeugachse mit zwei Federwegsensoren und einem angenommenen Wert $d_{krit} = 2$. In dieser Fig. 2 entspricht die Größe MW der ganzzahligen Summe $\overline{z}'_m(t)$ der aufgenommenen Federwegwerte $z_{m_n}(t)$. MW' bezeichnet einen mitgeführten Mittelwert. Dieser mitgeführte Mittelwert MW' wird nach der vorherigen Erkennung eines lokalen Minimums auf den Wert MW verringert, wenn MW zum Zeitpunkt t = kT mindestens um $d_{krit}$ + 1 niedriger ist als zum vorangehenden Zeitpunkt (k-1)T oder wird auf MW erhöht, wenn MW zum Zeitpunkt t = kT mindestens um 1 größer ist als zum vorangehenden Zeitpunkt (k-1)T. Der mitgeführte Mittelwert MW' wird nach der vorherigen Erkennung eines lokalen Maximums auf MW erhöht, wenn MW zum Zeitpunkt t = kT mindestens um $d_{krit}$ + 1 größer ist als zum vorangehenden Zeitpunkt (k-1)T oder wird auf MW verringert, wenn MW zum Zeitpunkt t = kT mindestens um 1 kleiner ist als zum vorangehenden Zeitpunkt (k-1)T. Ansonsten bleibt der mitgeführte Mittelwert MW' unverändert.

Wenn der Betrag der Änderung des mitgeführten Mittelwertes MW' die Schwelle $d_{krit}$ überschreitet, so wird die Zähleinrichtung für die Anzahl innerhalb der laufenden Beobachtungsperiode $T_B$ ermittelter lokaler Extrema inkrementiert.

**Patentansprüche**

1. Verfahren zur Ermittlung des Fahrzustandes eines Fahrzeuges, insbesondere bei Fehlen oder Ausfall eines Geschwindigkeitssensors **gekennzeichnet durch** folgende Verfahrensschritte

   a) laufende Abtastung der Federwege zwischen Fahrzeugaufbau und Fahrzeugachsen des Fahrzeugs,
   b) Bildung der Mittelwerte oder der Summen der gemessenen Federwegwerte für jede Fahrzeugachse,
   c) Ermittlung der Anzahl der lokalen Extrema der Mittelwerte oder der Summen der gemessenen Federwegwerte innerhalb einer vorgebbaren Beobachtungsperiode,
   d) Bestimmung der Frequenz der lokalen Extrema und damit der Frequenz der vertikalen Relativbewegung zwischen Fahrzeugsaufbau und Fahrzeugachse,
   e) Vergleich der Frequenz der lokalen Extrema mit einem vorgebbaren, einen Fahrzeugstillstand definierenden Frequenz-Schwellwert, dessen Überschreitung Fahrzeugfahrt bedeutet,
   f) Bereitstellung des Vergleichsergebnisses für Eingriffe in Fahrzeugregel, -steuer und/oder -überwachungseinrichtungen.

2. Verfahren nach Anspruch 1, **dadurch gekennzeichnet, daß** die Abtastung mit mindestens der doppelten Radeigenfrequenz des Fahrzeugs erfolgt.

3. Verfahren nach Anspruch 1, **dadurch gekennzeichnet, daß** nach der Bildung der Mittelwerte oder der Summen der gemessenen Federwegwerte die zeitliche Änderung dieser Mittelwerte oder Summenwerte ermittelt und der Betrag dieser zeitlichen Änderung mit einem vorbestimmten, ein Quantisierungsrauschen berücksichtigenden kritischen Wert verglichen wird, bei dessen Überschreitung das lokale Extremum gezählt wird.

4. Einrichtung zur Durchführung des Verfahrens nach einem der vorhergehenden Ansprüche, mit wenigstens einem Federwegsensor für wenigstens eine Fahrzeugachse, welcher die Federwege der vertikalen Relativbewegungen zwischen Fahrzeugaufbau und Fahrzeugachse laufend abtastet, **gekennzeichnet durch**

   a) eine Einrichtung (2) zur Bildung der Mittelwerte oder der Summen der gemessenen Federwegwerte,
   b) eine Einrichtung (6) zur Ableitung der lokalen Extrema aus den Mittelwerten oder Summenwerten,
   c) eine Zähleinrichtung (8) zur Ermittlung der Anzahl der lokalen Extrema der Mittelwerte oder der Summenwerte der gemessenen Federwegwerte innerhalb der Beobachtungsperiode,
   d) eine Einrichtung (10) zur Berechnung der Frequenz der lokalen Extrema,
   e) eine Einrichtung (12) zum Vergleich der Frequenz der lokalen Extrema mit einem vorgebbaren, einen Fahrzeugstillstand definierenden Frequenzschwellwert, wobei die Vergleichseinrichtung Fahrzeugfahrt signalisiert, wenn die Frequenz der lokalen Extrema den Frequenzschwellwert überschreitet.

5. Einrichtung nach Anspruch 4, **dadurch gekennzeichnet, daß** der Federwegsensor die Federwege mit mindestens der doppelten Radeigenfrequenz des Fahrzeuges abtastet.

6. Einrichtung nach Anspruch 4, **dadurch gekennzeichnet, daß** eine Einrichtung (14) zur Ermittlung des Betrages der zeitlichen Änderung der Mittelwerte oder Summenwerte vorgesehen ist, an die eine Vergleichseinrichtung (16) angeschlossen ist, in der der ermittelte Betrag mit einem vorgebbaren, ein Quantisierungsrauschen berücksichtigenden kritischen Wert verglichen wird und der die Zähleinrichtung (8) inkrementiert, wenn der Betrag der zeitlichen Änderung der Mittelwerte oder der Summenwerte den kritischen Wert überschreitet.

7. Anwendung des Verfahrens nach einem der Ansprüche 1-3 zur Plausibilitätsüberwachung von Fahrgeschwindigkeitssensoren.

8. Anwendung des Verfahrens nach einem der Ansprüche 1-3 bei Niveaureguliereinrichtungen zum Sperren oder Aktivieren von Funktionalitäten dieser Reguliereinrichtungen in Abhängigkeit von Fahrt, Stillstand oder bestimmtem Schwingungsfrequenzen der/des Federwege/s.

9. Anwendung des Verfahrens nach einem der Ansprüche 1-3 bei Stoßdämpferreguliereinrichtungen zum Sperren oder Aktivieren von Funktionalitäten dieser Reguliereinrichtungen in Abhängigkeit von Fahrt, Stillstand oder bestimmtem Schwingungsfrequenzen der/des Federwege/s.

**Claims**

1. Method for determining the driving status of a vehicle, in particular in the event of the absence or failure of a velocity sensor, **characterized by** the following method steps

   a) continuous scanning of the spring excursion between the vehicle body and the vehicle axles of the vehicle,
   b) formation of the mean values or the sums of the measured spring excursion values for each vehicle axle,
   c) determination of the number of the local extremes of the mean values or of the sums of the measured spring excursion values within a predefinable observation period,
   d) determination of the frequency of the local extreme values and therefore the frequency of the vertical relative movement between the vehicle body and vehicle axle,
   e) comparison of the frequency of the local extreme values with a predefinable frequency threshold value which defines a stationary state of the vehicle and the upward transgression of which means that the vehicle is travelling, and
   f) provision of the comparison result for interventions into the vehicle closed-loop, open-loop and/or monitoring devices.

2. Method according to Claim 1, **characterized in that** the scanning is carried out with at least twice the natural frequency of the wheels of the vehicle.

3. Method according to Claim 1, **characterized in that**, after the formation of the mean values or the sums of the measured spring excursion values, the change in these mean values or sum values over time is determined, and the absolute value of this change over time is compared with a predetermined critical value which takes into account a quantization noise, at the upward transgression of which the local extreme is counted.

4. Device for carrying out the method according to one of the preceding claims, having at least one spring excursion sensor for at least one vehicle axle, which spring excursion sensor continuously scans the spring excursion of the vertical relative movements between the vehicle body and the vehicle axle, **characterized by**

   a) a device (2) for forming the mean values or the sums of the measured spring excursion values,
   b) a device (6) for deriving the local extremes from the mean values or sum values,
   c) a counting device (8) for determining the number of the local extremes of the mean values or of the sum values of the measured spring excursion values within the observation period,
   d) a device (10) for calculating the frequency of the local extremes,
   e) a device (12) for comparing the frequency of the local extremes with a predefinable frequency threshold value which defines a stationary state of the vehicle, wherein the comparison device signals that the vehicle is travelling if the frequency of the local extremes exceeds the frequency threshold value.

5. Device according to Claim 4, **characterized in that** the spring excursion sensor scans the spring excursion with at least twice the natural frequency of the wheels of the vehicle.

6. Device according to Claim 4, **characterized in that** a device (14) for determining the absolute value of the change in the mean values or sum values over time is provided, to which device (14) a comparison device (16) is connected, in which comparison device (16) the determined absolute value is compared with a predefinable critical value which takes into account a quantization noise and which increments the counting device (8) if the absolute value of the change in the mean values or the sum values over time exceeds the critical value.

**7.** Application of the method according to one of Claims 1-3 for monitoring the plausibility of velocity sensors.

**8.** Application of the method according to one of Claims 1-3 in ride level control devices for disabling or activating functionalities of these regulating devices as a function of travel, stationary state or specific oscillation frequencies of the spring excursion.

**9.** Application of the method according to one of Claims 1-3 in shock absorber control devices for disabling or activating functionalities of these control devices as a function of travel, stationary state or specific oscillation frequencies of the spring excursion.


**Revendications**

**1.** Procédé pour déterminer l'état de conduite d'un véhicule, en particulier en cas d'erreur ou de panne d'un capteur de vitesse, **caractérisé par** les étapes de procédé suivantes :

a) balayage continu de la course de ressort entre la carrosserie du véhicule et les essieux du véhicule,
b) formation des valeurs moyennes ou des sommes des valeurs de course de ressort mesurées pour chaque essieu du véhicule,
c) détection du nombre des extrêmes locaux des valeurs moyennes ou des sommes des valeurs de course de ressort mesurées à l'intérieur d'une période d'observation prédéfinissable,
d) détermination de la fréquence des extrêmes locaux et donc de la fréquence du mouvement relatif vertical entre la carrosserie du véhicule et l'essieu du véhicule,
e) comparaison de la fréquence des extrêmes locaux avec une valeur seuil de fréquence prédéfinissable, définissant un arrêt du véhicule, dont le dépassement signifie le départ du véhicule,
f) fourniture du résultat de la comparaison pour des interventions dans des dispositifs de régulation, de commande et/ou de surveillance du véhicule.

**2.** Procédé selon la revendication 1, **caractérisé en ce que** le balayage s'effectue avec au moins le double de la fréquence propre des roues du véhicule.

**3.** Procédé selon la revendication 1, **caractérisé en ce qu'**après la formation des valeurs moyennes ou des sommes des valeurs de course de ressort mesurées, la variation dans le temps de ces valeurs moyennes ou valeurs de somme est détectée et la valeur absolue de cette variation dans le temps est comparée à une valeur critique prédéfinie tenant compte des bruits de quantification, dont l'extrême local est compté lors de son dépassement.

**4.** Dispositif pour mettre en oeuvre le procédé selon l'une quelconque des revendications précédentes, comprenant au moins un capteur de course de ressort pour au moins un axe de véhicule, qui balaye en continu la course de ressort des mouvements relatifs verticaux entre la carrosserie du véhicule et l'essieu du véhicule, **caractérisé par**

a) un dispositif (2) pour former les valeurs moyennes ou les sommes des valeurs de course de ressort mesurées,
b) un dispositif (6) pour dériver les extrêmes locaux des valeurs moyennes ou des valeurs de somme,
c) un dispositif de comptage (8) pour détecter le nombre des extrêmes locaux des valeurs moyennes ou des valeurs de somme des valeurs de course de ressort mesurées dans la période d'observation,
d) un dispositif (10) pour calculer la fréquence des extrêmes locaux,
e) un dispositif (12) pour comparer la fréquence des extrêmes locaux avec une valeur de fréquence seuil prédéfinissable définissant un arrêt du véhicule, le dispositif de comparaison signalant un départ du véhicule lorsque la fréquence des extrêmes locaux dépasse la valeur de fréquence seuil.

**5.** Dispositif selon la revendication 4, **caractérisé en ce que** le capteur de course de ressort balaye les courses de ressort avec au moins le double de la fréquence propre des roues du véhicule.

**6.** Dispositif selon la revendication 4, **caractérisé en ce que** l'on prévoit un dispositif (14) pour déterminer la valeur absolue de la variation dans le temps des valeurs moyennes ou des valeurs de somme, auquel est raccordé un dispositif de comparaison (16), dans lequel la valeur absolue déterminée est comparée avec une valeur critique prédéfinissable tenant compte des bruits de quantification, et qui incrémente le dispositif de comptage (8) lorsque la valeur absolue de la variation dans le temps des valeurs moyennes ou des valeurs de somme dépasse la valeur critique.

**7.** Application du procédé selon l'une quelconque des revendications 1 à 3, pour le contrôle de plausibilité de capteurs de vitesse du véhicule.

**8.** Application du procédé selon l'une quelconque des revendications 1 à 3, dans des dispositifs de régulation de niveau pour verrouiller ou activer des fonctions de ces dispositifs de régulation en fonction de la conduite, de l'arrêt ou de fréquences d'oscillation déterminées de la ou des courses de ressort.

**9.** Application du procédé selon l'une quelconque des revendications 1 à 3 dans des dispositifs de régulation de pare-chocs pour verrouiller ou activer des fonctions de ces dispositifs de régulation en fonction de la conduite, de l'arrêt ou de fréquences d'oscillation déterminées de la ou des courses de ressort.

Aufbaubewegungen

2 — MW

6 — Extrema MW

8 — $N_{Em}$

10 / $f_m$

$T_B$

12 / $f_m > f_{m,krit}$

$f_{m,krit}$

14 — $\left|\dfrac{\Delta MW}{\Delta t}\right|$

16 — $\left|\dfrac{\Delta MW}{\Delta t}\right| > \left|\dfrac{\Delta MW}{\Delta t}\right|_{krit}$

$$\left|\frac{\Delta MW}{\Delta t}\right| krit = d_{krit}$$

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19648176